(19) Europäisches Patentamt
European Patent Office
Office européen des brevets

(11) Veröffentlichungsnummer: **0 060 457**
**B1**

(12) # EUROPÄISCHE PATENTSCHRIFT

(45) Veröffentlichungstag der Patentschrift: **01.08.84**

(51) Int. Cl.³: **C 23 F 14/00**, B 08 B 9/02 // C10J3/16

(21) Anmeldenummer: **82101717.5**

(22) Anmeldetag: **05.03.82**

(54) **Verfahren zur Verhinderung von Ablagerungen in den Rohren von Abhitzekesseln.**

(30) Priorität: **14.03.81 DE 3109820**

(43) Veröffentlichungstag der Anmeldung: **22.09.82 Patentblatt 82/38**

(45) Bekanntmachung des Hinweises auf die Patenterteilung: **01.08.84 Patentblatt 84/31**

(84) Benannte Vertragsstaaten: **BE DE FR GB IT NL**

(56) Entgegenhaltungen:
**US - A - 3 608 249**

**SOVIET INVENTIONS ILLUSTRATED Sektion P,Q, Woche B44, 12. Dezember 1979,DERWENT PUBLICATIONS LTD, London, P43**
**SOVIET INVENTIONS ILLUSTRATED,Sektion P,Q, Woche B47, 9.Januar 1980,DERWENT PUBLICATIONS LTD, London,P43**

(73) Patentinhaber: **BASF Aktiengesellschaft, Carl-Bosch-Strasse 38, D-6700 Ludwigshafen (DE)**

(72) Erfinder: **Gettert, Hans, Dr. Chem., Muldweg 2, D-6945 Gross-Sachsen (DE)**
Erfinder: **Kaempfer, Knut, Dr. Chem., Petersstrasse 1, D-6700 Ludwigshafen (DE)**

**EP 0 060 457 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Kohlenoxid- und wasserstoffhaltige Heiz- oder Synthesegase werden u.a. durch partielle Oxidation von fossilen Brennstoffen wie z.B. Rohöl, Rückstandsöl , Petrolkoks aber auch Kohle gewonnen. Dazu wird der fossile Brennstoff mit Sauerstoff bei gleichzeitiger Anwesenheit von Wasserdampf und/oder Kohlendioxid bei hohen Temperaturen zur Reaktion gebracht. Zur Kühlung und zur gleichzeitigen Gewinnung der fühlbaren Wärme werden die gebildeten Gase durch die Rohre eines Abhitzekessels geleitet, und es wird dabei Wasserdampf erzeugt.

Die genannten fossilen Brennstoffe enthalten nicht nur Kohlenstoff und Wasserstoff, sondern auch eine ganze Reihe anorganischer Bestandteile wie z.B. Schwefel, Chlor, Eisen, Nickel, Vanadin, Alkali- und Erdalkalimetalle, um nur die wichtigsten aufzuzählen.

Bei der Vergasung von schwefelreichen Einsatzstoffen beobachtet man eine Belegung der Rohre im Abhitzekessel, und zwar bevorzugt im kältern Teil der Rohre, d.h. in der Nähe des Gasausganges. Je nach Druck des erzeugten Dampfes beträgt die Temperatur zwischen 200 und 350°C. Eine chemische Untersuchung der Ablagerungen ergab, dass es sich dabei vorwiegend um Nickelsulfid mit geringen Mengen an Eisen- und Vanadinverbindungen handelt.

Die Ablagerungen entstehen durch die Bildung von flüchtigen Ni-, Fe- und V-Chloriden in der heissen Reaktionszone, die dann beim Abkühlen im hinteren Teil des Abhitzekessels an den Rohrwandungen kondensieren und dort mit dem in dem Gas enthaltenen $H_2S$ zu den Metallsulfiden abreagieren. Dabei wird bevorzugt Nickel abgelagert, da es im Vergleich zu Fe- und V-Chlorid die höchste Kondensationstemperatur hat. Ausserdem ist die Bildung von $NiCl_2$ unter den Bedingungen der partiellen Oxidation begünstigt, da bei Anwesenheit von Wasserdampf Eisen und Vanadin bevorzugt die Oxide bilden.

Da eine Verlegung der Rohre des Abhitzekessels mit Metallsulfiden normalerweise nur bei der Vergasung von Einsatzstoffen mit einem Schwefelgehalt >2 Gew.-% aber sonst vergleichbaren Metall- und Chlorgehalten auftritt, ist am Aufbau der Ablagerungen noch eine weitere konkurierende Reaktion beteiligt.

Da in dem Spaltgas Wasserstoff und Schwefelwasserstoff enthalten sind, stellt sich folgendes Reaktionsgleichgewicht ein:

$$NiS + H_2 \rightleftharpoons Ni + H_2S$$

Die Verschiebung des Gleichgewichtes ist von Temperatur, Wasserstoff- und Schwefelwasserstoffpartialdruck abhängig. Die Bildung von Nikkelsulfid ist bei hohen $H_2S$-Konzentrationen begünstigt.

Es wurde nun gefunden, dass man in Abhitzekesseln, die zum Kühlen von Gasen eingesetzt werden, die durch partielle Oxidation fossiler Brennstoff gebildet werden, vorhandene Ablagerungen, vorzugsweise von Nickelsulfid, abbauen bzw. die Bildung von Ablagerungen verhindern kann, wenn man die Rohre bei Betriebstemperatur mit Wasserstoff enthaltenden $H_2S$-freien bzw. $H_2S$-armen Gasen spült.

Für die Durchführung des Verfahrens ist es zweckmässig, die einzelnen Rohre des Abhitzekessels durch den Einbau geeigneter Armaturen absperrbar zu machen und dann unter Betriebsbedingungen nacheinander vom Ausgang her zur heissen Reaktionszone mit einem $H_2$-reichen, $H_2S$-freien bzw. $H_2S$-armen Gas zu spülen. Dabei wird das NiS umgewandelt. Die damit verbundene Gefügeumwandlung bewirkt den Zerfall der Ablagerungen. Das dabei entstehende Nickel wird mit dem Spülgas aus dem Rohr heraustransportiert. Gegebenenfalls kann man das Rohr auch zusätzlich mit Dampf oder $N_2$ freiblasen.

Das für die Umwandung von Nickelsulfid eingesetzte Gas ist nicht verloren, da es wieder in den Prozess zurückgelangt. Die Reinigung der Rohre wird vorteilhaft kontinuierlich nacheinander durchgeführt, ohne dass dadurch eine Einschränkung der Produktion notwendig ist. Die Dauer des Reinigungsprozesses pro Rohr beträgt im allgemeinen 1 bis 3 d.

*Beispiel*

In ein Eisenrohr mit einem Durchmesser von 50 mm wird ein kleines Keramikgefäss, gefüllt mit wasserfreien $NiCl_2$, gestellt und das Rohr an dieser Stelle mit einem Muffelofen auf 800°C erhitzt. Gleichzeitig wird ein $N_2$/HCl-Gemisch durch das Rohr geleitet. Nach etwa 1 h hat sich im kalten Teil des Rohres eine Ablagerung von $NiCl_2$ gebildet.

Das Durchleiten von $N_2$/HCl wird eingestellt und der Teil des Rohres in dem sich das $NiCl_2$ abgelagert hat wird konstant auf 800°C temperiert. Bei dieser Temperatur wird ein Gemisch aus 98% $H_2$ und 2% $H_2S$ durch das Rohr geleitet. Dabei wandelt sich das $NiCl_2$ in NiS um.

Danach wird die $H_2S$-Zugabe eingestellt und nur noch Wasserstoff eingeleitet. Innerhalb von 5 h zerfällt die Nickelsulfidablagerung und es bildet sich staubförmiges Nickel, das mit dem $H_2$-Strom aus dem Rohr ausgeblasen wird.

## Patentanspruch

Verfahren zur Verhinderung bzw. zum Abbauen von Ablagerungen in den Rohren von Abhitzekesseln, die zum Kühlen von Gasen eingesetzt werden, die durch partielle Oxidation fossiler Brennstoffe gebildet werden, dadurch gekennzeichnet, dass man die Rohre bei Betriebstemperatur mit Wasserstoff enthaltenden $H_2S$-freien bzw. $H_2S$-armen Gasen spült.

## Claim

A process for preventing or removing deposits in the pipes of waste-heat boilers employed for cooling gases which are formed by partially oxidizing fossil fuels, wherein the pipes are flushed, at the

operating temperature, with hydrogen-containing gases which contain little or no $H_2S$.

## Revendication

Procédé pour la prévention de dépôts dans les tubes de chaudières à chaleur d'échappement, utilisées pour le refroidissement de mélanges gazeux produits par une oxydation partielle de combustibles fossiles, ou pour l'élimination de dépôts déjà formés, à la température de régime, avec des gaz contenant de l'hydrogène, mais exempts de ou du moins pauvres en $H_2S$.